# EUROPEAN PATENT APPLICATION

(11) **EP 4 068 861 A1**
(43) Date of publication of application: **05.10.2022**
(21) Application number: 19958107.5
(22) Date of filing: 31.12.2019
(51) Int. Cl.: H04W 48/16

(54) **METHOD AND APPARATUS FOR TRANSMITTING SYSTEM INFORMATION**

(71) Applicant: Huawei Technologies Co., Ltd., Shenzhen, Guangdong 518129 (CN)
(72) Inventor: HAO, Jinping, Shenzhen, Guangdong 518129 (CN); JIN, Yinghao, Shenzhen, Guangdong 518129 (CN); ZHANG, Jietao, Shenzhen, Guangdong 518129 (CN)
(74) Representative: MERH-IP Matias Erny Reichl Hoffmann Patentanwälte PartG mbB
(86) International application number: PCT/CN2019/130940
(87) International publication number: WO 2021/134699

(57) **Abstract**

Embodiments of this application provide a system information transfer method. The method includes: A terminal device sends a first request to a radio access network RAN device, where the first request is used by the terminal device to establish a radio resource control RRC connection to a first cell controlled by the RAN device, the first request includes first information, and the first information indicates at least one of the following: the terminal device expects to access a second cell, a second cell that the terminal device expects to access, and at least a part of an identifier of the terminal device. The terminal device receives a first response from the RAN device, where the first response includes a cell identifier and a part of system information of each of one or more second cells. According to the method, the terminal device can be effectively enabled to access the second cell.

## Description

### TECHNICAL FIELD

The present application relates to the wireless communication field, and in particular, to a system information transfer method and an apparatus.

### BACKGROUND

With rapid development of wireless communication technologies, a 5th generation (5th Generation, 5G) wireless communication technology has become a popular subject in the industry currently. 5G supports a variety of application requirements, for example, supports an access capability characterized by higher-rate experience and higher bandwidth, information exchange characterized by a lower latency and high reliability, and larger-scale and low-cost access and management of machine-type communication devices. Key factors for 5G application are supporting ubiquitous requirements of various vertical industries and ensuring energy saving.

When accessing a mobile network, a terminal device searches for a cell on a carrier frequency within a specific frequency range and accesses the cell, where the carrier frequency may also be referred to as a carrier. The terminal device performs data communication with the mobile network by using a resource that is in a specific bandwidth range corresponding to the carrier, where the bandwidth range may include a plurality of subcarriers. Usually, a cell sends public broadcast signaling, for example, a synchronization signal and system information, on a part of subcarriers corresponding to a carrier of the cell, so that the terminal device can access the cell. The terminal device synchronizes with the cell by using the synchronization signal, and reads the system information to obtain necessary information for accessing the cell, to access the cell. For some cells, due to a requirement for energy saving, a part of public broadcast signaling may not be sent or even no public broadcast signaling is sent. For example, a part of system information may be sent or no system information is sent at all, or further no synchronization signal is sent, to reduce power consumption and transmitting time of a transmitter. Currently, there is no appropriate solution for how to enable the terminal device to access these cells.

### SUMMARY

Embodiments of this application provide a system information transfer method, to effectively enable a terminal device to access an energy-saving cell.

The following describes this application from a plurality of aspects. It is easy to understand that implementations of the plurality of aspects may be mutually referenced.

According to a first aspect, this application provides a system information transfer method. The method includes: A terminal device sends a first request to a radio access network RAN device, where the first request includes first information, the first information indicates at least one of the following: the terminal device expects to access a second cell, a second cell that the terminal device expects to access, and at least a part of an identifier of the terminal device, and the first request is used by the terminal device to establish a radio resource control RRC connection to a first cell controlled by the RAN device. The terminal device receives a first response for the first request from the RAN device, where the first response includes a cell identifier and a part of system information SI of each of one or more second cells.

It can be learned that according to the method provided in this embodiment of this application, the terminal device obtains the part of the SI of the second cell when accessing a RAN device, so that the terminal device is enabled to access the second cell.

In a possible implementation, before the terminal device sends the first request to the radio access network RAN device, the method further includes: The terminal device sends a random access preamble to the RAN device. The terminal device receives a random access response from the RAN device.

In this step, the terminal device obtains the part of the SI of the second cell when randomly accessing the first cell.

In a possible implementation, when the first information indicates the second cell that the terminal device expects to access, the first information includes identifiers of the one or more second cells.

In this manner, when accessing the first cell, the terminal device indicates the second cell that the terminal device expects to access, so that the first cell may send, to the terminal device, a part of SI of the specific second cell that the terminal device expects to access. Therefore, information transfer efficiency is improved.

In a possible implementation, when the first information indicates the at least a part of an identifier of the terminal device, the first information includes at least a part of a temporary terminal device identifier provided by a 5G core network for the terminal device.

In this manner, the terminal device only needs to include the at least a part of an identifier of the terminal device in an RRC request. Therefore, air interface signaling overheads are reduced.

In a possible implementation, the first cell sends system information required for the terminal device to initially access the first cell, and the second cell sends a part of system information or does not send system information required for the terminal device to initially access the second cell.

In a possible implementation, that the first information indicates at least a part of an identifier of the terminal device includes: The first information includes the at least a part of a temporary terminal device identifier provided by the 5th generation 5G core network for the terminal device.

In a possible implementation, the part of the system information of the second cell includes remaining minimum system information RMSI of the second cell.

In a possible implementation, the part of the system information of the second cell includes RMSI and other system information OSI of the second cell.

In a possible implementation, the first request is an RRC connection request message or an RRC setup request message.

In a possible implementation, the first response is an RRC reject message or an RRC connection reject message.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a terminal device sends a first request to a radio access network RAN device includes that the terminal device sends the first request to a central unit CU of the RAN device through a distributed unit DU of the RAN device; and that the terminal device receives a first response for the first request from the RAN device includes that the terminal device receives the first response sent by the CU through the DU, where the DU is connected to the CU.

According to a second aspect, this application provides a system information transfer method. The method includes: A radio access network RAN device receives a first request from a terminal device, where the first request includes first information, the first information indicates at least one of the following: the terminal device expects to access a second cell, a second cell that the terminal device expects to access, and at least a part of an identifier of the terminal device, and the first request is used by the terminal device to establish a radio resource control RRC connection to a first cell controlled by the RAN device. The RAN device sends a first response for the first request to the terminal device, where the first response includes a cell identifier and a part of system information of each of one or more second cells.

It can be learned that according to the method provided in this embodiment of this application, the terminal device obtains the part of the SI of the second cell when accessing a RAN device, so that the terminal device is enabled to access the second cell.

In a possible implementation, before the RAN device receives the first request from the terminal device, the method further includes: The RAN device receives a random access preamble from the terminal device. The RAN device sends a random access response to the terminal device.

In this step, the terminal device obtains the part of the SI of the second cell when initially accessing the first cell.

In a possible implementation, when the first information indicates the second cell that the terminal device expects to access, the first information includes identifiers of the one or more second cells.

In this step, when accessing the first cell, the terminal device indicates the second cell that the terminal device expects to access, so that the first cell may send, to the terminal device, a part of SI of the specific second cell that the terminal device expects to access. Therefore, information transfer efficiency is improved.

In a possible implementation, when the first information indicates the at least a part of an identifier of the terminal device, the first information includes at least a part of a temporary terminal device identifier provided by a 5G core network for the terminal device.

In this manner, the terminal device only needs to include the at least a part of an identifier of the terminal device in an RRC request. Therefore, air interface signaling overheads are reduced.

In a possible implementation, before the radio access network RAN device receives the first request from the terminal device, the method further includes: The RAN device obtains the cell identifier and the part of the system information of each of the one or more second cells.

In a possible implementation, the first cell sends system information required for the terminal device to initially access the first cell, and the second cell sends a part of system information or does not send system information required for the terminal device to initially access the second cell.

In a possible implementation, that the first information indicates at least a part of an identifier of the terminal device includes: The first information includes the at least a part of a temporary terminal device identifier provided by the 5th generation 5G core network for the terminal device.

In a possible implementation, the part of the system information of the second cell includes remaining minimum system information RMSI of the second cell.

In a possible implementation, the part of the system information of the second cell includes RMSI and other system information OSI of the second cell.

In a possible implementation, the first request is an RRC connection request message or an RRC setup request message.

In a possible implementation, the first response is an RRC reject message or an RRC connection reject message.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a radio access network RAN device receives a first request from a terminal device includes that a central unit CU of the RAN device receives the first request from the terminal device through a distributed unit DU; and that the RAN device sends a first response for the first request to the terminal device includes that the CU sends the first response to the terminal device through the DU, where the DU is connected to the CU.

According to a third aspect, this application provides a system information transfer method. The method includes: A terminal device sends a radio resource control RRC reestablishment request to a radio access network RAN device, where the RRC reestablishment request includes first information, the first information indicates at least one of the following: the terminal device expects to access a second cell, and a second cell that the terminal device expects to access, and the first request is used by the terminal device to perform RRC reestablishment with a first cell controlled by the RAN device. The terminal device receives an RRC reestablishment response message from the RAN device, where the RRC reestablishment response message includes a cell identifier and a part of system information SI of each of one or more second cells.

It can be learned that according to the method provided in this embodiment of this application, the terminal device in an RRC connected state actively requests to obtain a part of SI of a DCC cell, so that the terminal device is enabled to access the DCC cell.

In a possible implementation, when the first information indicates the second cell that the terminal device expects to access, the first information includes identifiers of the one or more second cells.

In this manner, during RRC reestablishment, the terminal device indicates the second cell that the terminal device expects to access, so that the first cell may send, to the terminal device, a part of SI of the specific second cell that the terminal device expects to access. Therefore, information transfer efficiency is improved.

In a possible implementation, the first cell sends system information required for the terminal device to initially access the first cell, and the second cell sends a part of system information or does not send system information required for the terminal device to initially access the second cell.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a terminal device sends an RRC reestablishment request to a radio access network RAN device includes that the terminal device sends the RRC reestablishment request to a central unit CU of the RAN device through a distributed unit DU of the RAN device; and that the terminal device receives an RRC reestablishment response message from the RAN device includes that the terminal device receives the RRC reestablishment response message sent by the CU through the DU, where the DU is connected to the CU.

According to a fourth aspect, this application provides a system information transfer method. The method includes: A radio access network RAN device receives a radio resource control RRC reestablishment request from a terminal device, where the RRC reestablishment request includes first information, the first information indicates at least one of the following: the terminal device expects to access a second cell, and a second cell that the terminal device expects to access, and the first request is used by the terminal device to perform RRC reestablishment with a first cell controlled by the RAN device. The RAN device sends an RRC reestablishment response message to the terminal device, where the RRC reestablishment response message includes a cell identifier and a part of system information SI of each of one or more second cells.

It can be learned that according to the method provided in this embodiment of this application, the terminal device in an RRC connected state actively requests to obtain a part of SI of a DCC cell, so that the terminal device is enabled to access the DCC cell.

In a possible implementation, when the first information indicates the second cell that the terminal device expects to access, the first information includes identifiers of the one or more second cells.

In this manner, during RRC reestablishment, the terminal device indicates the second cell that the terminal device expects to access, so that the first cell may send, to the terminal device, a part of SI of the specific second cell that the terminal device expects to access. Therefore, information transfer efficiency is improved.

In a possible implementation, the first cell sends system information required for the terminal device to initially access the first cell, and the second cell sends a part of system information or does not send system information required for the terminal device to initially access the second cell.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a radio access network RAN device receives an RRC reestablishment request from a terminal device includes that a central unit CU of the RAN device receives the RRC reestablishment request from the terminal device through a distributed unit DU; and that the RAN device sends an RRC reestablishment response message to the terminal device includes that the CU sends the RRC reestablishment response message to the terminal device through the DU, where the DU is connected to the CU.

According to a fifth aspect, this application provides a system information transfer method. The method includes: A terminal device receives a radio resource control RRC reconfiguration message sent by a radio access network RAN device, where the RRC reconfiguration message includes second information, the second information includes a cell identifier and a part of system information SI of each of one or more second cells, and the terminal device has established an RRC connection to a first cell controlled by the RAN device. The terminal device sends an RRC reconfiguration response message to the RAN device.

In the foregoing steps in this embodiment of this application, the first cell actively sends the SI of the second cell to the terminal device in an RRC connected state, so that the terminal device is enabled to access the second cell.

In a possible implementation, the first cell sends system information required for the terminal device to initially access the first cell, and the second cell sends a part of system information or does not send system information required for the terminal device to initially access the second cell.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a terminal device receives an RRC reconfiguration message sent by a RAN device includes that the terminal device receives the RRC reconfiguration message sent by a central unit CU of the RAN device to the terminal device through a distributed unit DU; and that the terminal device sends an RRC reconfiguration response message to the RAN device includes that the terminal device sends the RRC reconfiguration response message to the CU through the DU, where the DU is connected to the CU.

According to a sixth aspect, this application provides a system information transfer method. The method includes: A radio access network RAN device sends a radio resource control RRC reconfiguration message to a terminal device, where the RRC reconfiguration message includes second information, the second information includes a cell identifier and a part of system information SI of each of one or more second cells, and the terminal device has established an RRC connection to a first cell controlled by the RAN device. The RAN device receives an RRC reconfiguration response message from the terminal device.

In the foregoing steps in this embodiment of this application, the first cell actively sends the SI of the second cell to the terminal device in an RRC connected state, so that the terminal device is enabled to access the second cell.

In a possible implementation, the first cell sends system information required for the terminal device to initially access the first cell, and the second cell sends a part of system information or does not send system information required for the terminal device to initially access the second cell.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, that a RAN device sends an RRC reconfiguration message to a terminal device includes that a central unit CU of the RAN device sends the RRC reconfiguration message to the terminal device through a distributed unit DU; and that the RAN device receives an RRC reconfiguration response message from the terminal device includes that the CU receives the RRC reconfiguration response message from the terminal device through the DU, where the DU is connected to the CU.

According to a seventh aspect, this application provides a system information transfer method. The method includes: A first radio access network RAN device sends second information to a second RAN device, where the second information indicates a cell identifier and a part of system information SI of each of one or more second cells controlled by the first RAN device. The first RAN device receives a response for the second information from the second RAN device. The second RAN device controls one or more first cells, the first cell sends system information required for a terminal device to initially access the first cell, and the second cell sends a part of system information or does not send system information required for the terminal device to initially access the second cell.

In the foregoing steps in this embodiment of this application, the first cell may learn of the part of the SI of the second cell, so that the first cell is enabled to send the part of the SI of the second cell to the terminal device.

In a possible implementation, the first RAN device sends third information to the second RAN device, where the third information indicates that one or more cells controlled by the first RAN device are second cells.

In a possible implementation, the first RAN device receives a response for the third information from the second RAN device.

In this manner, the first cell may learn of a second cell surrounding the first cell, and this provides assistance information for the first cell to send a part of SI of the second cell to the terminal device.

In a possible implementation, the third information includes information indicating a type of the second cell.

In this manner, the first cell may learn of the type of the second cell, and this further provides assistance information for the first cell to send the part of the SI of the second cell to the terminal device.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, a central unit CU of the first RAN device sends the second information to the second RAN device, and the CU of the first RAN device receives the response for the second information from the second RAN device.

According to an eighth aspect, this application provides a system information transfer method. The method includes: A second radio access network RAN device receives second information from a first RAN device, where the second information indicates a cell identifier and a part of system information SI of each of one or more second cells controlled by the first RAN device. The second RAN device sends a response for the second information to the first RAN device. The second RAN device controls one or more first cells, the first cell sends system information required for a terminal device to initially access the first cell, and the second cell sends a part of system information or does not send system information required for the terminal device to initially access the second cell.

In the foregoing steps in this embodiment of this application, the first cell may learn of the part of the SI of the second cell, so that the first cell is enabled to send the part of the SI of the second cell to the terminal device.

In a possible implementation, the second RAN device receives third information from the first RAN device, where the third information indicates that one or more cells controlled by the first RAN device are second cells.

In a possible implementation, the second RAN device sends a response for the third information to the first RAN device.

In this manner, the first cell may learn of a second cell surrounding the first cell, and this provides assistance information for the first cell to send a part of SI of the second cell to the terminal device.

In a possible implementation, the third information includes information indicating a type of the second cell.

In this manner, the first cell may learn of the type of the second cell, and this further provides assistance information for the first cell to send the part of the SI of the second cell to the terminal device.

In a possible implementation, the first cell is a new radio NR cell (or a cell controlled by a gNB), and/or the second cell is a new radio NR cell (or a cell controlled by a gNB).

In a possible implementation, the first cell is an LTE cell (or a cell controlled by a gNB), and/or the second cell is an LTE cell (or a cell controlled by a gNB).

In a possible implementation, the first cell is an eLTE cell (or a cell controlled by an ng-eNB), and/or the second cell is an eLTE cell (or a cell controlled by an ng-eNB).

In a possible implementation, a central unit DU of the second RAN device receives the second information from the second RAN device through a central unit CU connected to the DU, and the DU of the second RAN device sends the response for the second information to the second RAN device through the CU.

According to a ninth aspect, a terminal device is provided. The terminal device is configured to perform the method according to any one of the first aspect or the possible implementations of the first aspect, the method according to any one of the third aspect or the possible implementations of the third aspect, or the method according to any one of the fifth aspect or the possible implementations of the fifth aspect. Specifically, the terminal device may include a unit configured to perform the method according to any one of the first aspect or the possible implementations of the first aspect, the method according to any one of the third aspect or the possible implementations of the third aspect, or the method according to any one of the fifth aspect or the possible implementations of the fifth aspect.

According to a tenth aspect, a radio access network RAN device is provided. The RAN device is configured to perform the method according to any one of the second aspect or the possible implementations of the second aspect, the method according to any one of the fourth aspect or the possible implementations of the fourth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect. Specifically, the RAN device may include a unit configured to perform the method according to any one of the second aspect or the possible implementations of the second aspect, the method according to any one of the fourth aspect or the possible implementations of the fourth aspect, the method according to any one of the sixth aspect or the possible implementations of the sixth aspect, the method according to any one of the seventh aspect or the possible implementations of the seventh aspect, or the method according to any one of the eighth aspect or the possible implementations of the eighth aspect.

According to an eleventh aspect, a computer program product is provided. The computer program product includes computer program code. When the computer program code is run by a communication unit and a processing unit, or a transceiver and a processor of a communication device (for example, an access network device or a terminal device), the communication device is enabled to perform the method according to any one of the first aspect to the eighth aspect, or the possible implementations of the first aspect to the eighth aspect.

According to a twelfth aspect, a computer-readable storage medium is provided. The computer-readable storage medium stores a program, and the program enables a computer to perform the method according to any one of the first aspect to the eighth aspect, or the possible implementations of the first aspect to the eighth aspect.

According to a ninth aspect, an embodiment of this application provides a chip. The chip is coupled to a memory, and performs the method according to any one of the first aspect or the possible designs of the first aspect, any one of the second aspect or the possible designs of the second aspect, any one of the third aspect or the possible designs of the third aspect, any one of the fourth aspect or the possible designs of the fourth aspect, any one of the fifth aspect or the possible designs of the fifth aspect, any one of the sixth aspect or the possible designs of the sixth aspect, any one of the seventh aspect or the possible designs of the seventh aspect, or any one of the eighth aspect or the possible designs of the eighth aspect in embodiments of this application.

These aspects or another aspect of the present application may be clearer and more intelligible in descriptions in the following (plurality of) embodiments.

### BRIEF DESCRIPTION OF DRAWINGS

The following briefly describes the accompanying drawings used in embodiments of this application:
FIG. 1 is a schematic diagram of a wireless communication system according to an embodiment of this application;
FIG. 2(a) and FIG. 2(b) are schematic diagrams of architectures of gNBs divided into CUs and DUs according to an embodiment of this application;
FIG. 3 is a schematic diagram of a difference between information sent in physical frames of BCC and DCC cells in NR according to an embodiment of this application;
FIG. 4 is a schematic flowchart of a method in which a terminal device randomly accesses a RAN device and establishes an RRC connection according to an embodiment of this application;
FIG. 5 is a schematic flowchart of another method in which a terminal device randomly accesses a RAN device and establishes an RRC connection according to an embodiment of this application;
FIG. 6 is a schematic flowchart of a method in which a terminal device requests a RAN device to send a part of SI of a DCC cell according to an embodiment of this application;
FIG. 7 is a schematic flowchart of a method in which a RAN device actively sends a part of SI of a DCC cell to a terminal device according to an embodiment of this application;
FIG. 8 is a schematic flowchart of a method in which a terminal device requests SI of a DCC cell from a RAN device according to an embodiment of this application;
FIG. 9 is a schematic flowchart of a method for exchanging information between a first RAN device that controls a DCC cell and a second RAN device that controls a BCC cell according to an embodiment of this application;
FIG. 10 is a schematic block diagram of a terminal device according to an embodiment of this application;
FIG. 11 is another schematic block diagram of a terminal device according to an embodiment of this application;
FIG. 12 is a schematic block diagram of a first network device according to an embodiment of this application;
FIG. 13 is another schematic block diagram of a first network device according to an embodiment of this application;
FIG. 14 is a schematic block diagram of a second network device according to an embodiment of this application; and
FIG. 15 is another schematic block diagram of a second network device according to an embodiment of this application.

### DETAILED DESCRIPTION OF EMBODIMENTS

The following describes embodiments of this application with reference to the accompanying drawings in embodiments of this application.

In this application, the word "example" is used to represent "giving an example, an illustration, or a description". Any embodiment described as an "example" in this application should not be explained as being more preferred or having more advantages than another embodiment. For the purpose that any person skilled in the art can implement and use the present application, the following descriptions are provided. In the following descriptions, details are listed for the purpose of explanation. It should be understood that, a person of ordinary skill in the art may learn that the present application can also be implemented without using these specific details. In other instances, well-known structures and processes are not described in detail, to avoid obscuring the descriptions of the present application with unnecessary details. Therefore, the present application is not limited to the described embodiments but extends to the widest scope that complies with the principles and features disclosed in this application.

In the specification, claims, and accompanying drawings of this application, the terms "first", "second", "third", "fourth", and the like (if existent) are intended to distinguish between similar objects but do not necessarily indicate a specific order or sequence. It should be understood that data termed in such a way is interchangeable in appropriate circumstances, so that embodiments of this application described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The terms "system" and "network" may be used interchangeably in this specification.

Specific embodiments are used in the following to describe in detail technical solutions of the present application. The following several specific embodiments may be combined with each other, and a same or similar concept or process may not be described repeatedly in some embodiments.

The technical solutions in embodiments of this application may be applied to various wireless communication systems, for example, a long term evolution (Long Term Evolution, LTE) system, a 5th generation (5th generation, 5G) mobile communication system, a new radio (new radio, NR) communication system, a next generation (next generation, NG) communication system, and a future mobile communication system.

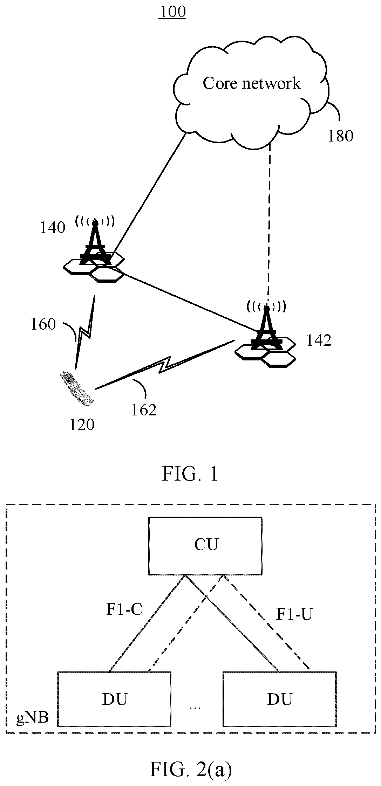

In the wireless communication system, a terminal device is connected to a radio access network (radio access network, RAN) device through a radio link, and communicates with another terminal device, accesses a wireless internet, or performs another operation through a core network (core network, CN) device connected to the RAN device. Usually, one terminal device is wirelessly connected to one RAN device to implement communication. Further, one terminal device may alternatively be wirelessly connected to two or more RAN devices to implement communication. FIG. 1 is a schematic diagram of a wireless communication system 100 according to an embodiment of this application. A terminal device 120 is wirelessly connected to a RAN device 140 through an air interface 160. Optionally, in the wireless communication system, the terminal device 120 is further wirelessly connected to a RAN device 142 through an air interface 162. In a possible implementation, data transmission between the terminal device 120 and a core network 180 may be performed through an interface between the RAN device 140 and the core network 180, and data between the terminal device 120 and the RAN device 142 is transmitted to the core network 180 through the RAN device 140 over an interface between the RAN device 140 and the RAN device 142. In another possible implementation, data transmission between the terminal device 120 and the core network 180 may be separately performed through the interface between the RAN device 140 and the core network 180 and an interface between the RAN device 142 and the core network 180. It should be noted that the RAN device 140 and the RAN device 142 in FIG. 1 may be separately deployed at different geographical locations, or may be deployed at a same geographical location, that is, the RAN device 140 and the RAN device 142 are co-sited.

In an actual system, the RAN device shown in FIG. 1 may be a next-generation base station, for example, a next-generation NodeB (next-generation NodeB, gNB) or a next-generation evolved NodeB (next-generation evolved NodeB, ng-eNB), or may be an access point (access point, AP) in a wireless local area network (Wireless Local Area Network, WLAN), an evolved NodeB (evolved NodeB, eNB or eNodeB) in LTE, a relay node or an access point, a vehicle-mounted device, a wearable device, a transmission reception point (transmission reception point, TRP), or the like. It should be understood that the terminal device communicates with the RAN device by using a transmission resource (for example, a frequency domain resource, a time domain resource, or a code domain resource) used in one or more cells managed by the RAN device. The cell may be a macro cell (macro cell), a hyper cell (hyper cell), or a small cell (small cell). The small cell herein may include a metro cell (metro cell), a micro cell (micro cell), a pico cell (pico cell), a femto cell (femto cell), and the like. These small cells are characterized by small coverage and low transmit power, and are applicable to providing a high-rate data transmission service. The terminal device in FIG. 1 may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a station (station, ST) in a WLAN, a cellular phone, a cordless phone, a SIP phone, a wireless local loop (wireless local loop, WLL) station, a personal digital assistant (personal digital assistant, PDA) device, a handheld device with a wireless communication function, a relay device, a computing device or another processing device coupled to a wireless modem, a vehicle-mounted device, a wearable device, a terminal device in a next-generation communication system, for example, a terminal device in a 5G network or a terminal device in a future evolved public land mobile network (public land mobile network, PLMN), or the like. By way of example but not limitation, in embodiments of this application, the terminal device may alternatively be a wearable device. The wearable device may also be referred to as a wearable intelligent device, and is a general term for wearable devices, such as glasses, gloves, watches, clothes, and shoes, that are developed by applying wearable technologies to intelligent designs of daily wear. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, for example, smart watches or smart glasses, and devices that focus on only one type of application function and need to work with other devices such as smartphones, for example, various smart bands or smart jewelry for monitoring physical signs.

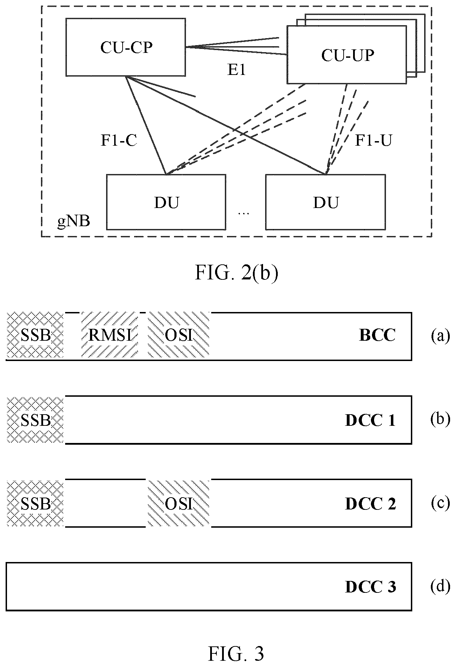

Optionally, in a 5G system, a RAN device (for example, a gNB) may be further divided into a central unit (central unit, CU) and a distributed unit (distributed unit, DU) based on a protocol stack. The CU and the DU may be separately deployed on different physical devices. The CU is responsible for operations of an RRC layer, an SDAP layer, and a PDCP layer, and the DU is responsible for operations of an RLC layer, a MAC layer, and a PHY layer. FIG. 2(a) shows an architecture of a gNB divided into a CU and a DU. One gNB may include one CU and one or more DUs, and the one or more DUs are controlled by the CU. One DU is connected to the CU through a control plane interface (for example, F1-C), to transmit control plane data. One DU is connected to the CU through a user plane interface (for example, F1-U), to transmit user plane data. Further, the CU may be classified into a central unit-control plane (that is, a central unit-control plane CU-CP network element) and a central unit-user plane (that is, a central unit-user plane CU-UP network element). The CU-CP and the CU-UP may also be separately deployed on different physical devices, the CU-CP is responsible for control plane processing at the RRC layer and the PDCP layer, and the CU-UP is responsible for user plane processing at the SDAP layer and the PDCP layer. FIG. 2(b) shows an architecture of a gNB divided into a CU-CP, a CU-UP, and a DU. One gNB may include one CU-CP, one or more CU-UPs, and one or more DUs. One CU-UP is connected to only one CU-CP through a control plane interface (for example, E1), to transmit control plane data. One DU is connected to only one CU-CP through a control plane interface (for example, F1-C), to transmit control plane data. Under control of the CU-CP, one DU may be connected to one or more CU-UPs, one CU-UP may also be connected to one or more DUs, and the CU-UP is connected to the DU through a user plane interface (for example, F1-U) to transmit user plane data. It should be noted that, to maintain network elasticity, one DU or one CU-UP may alternatively be connected to a plurality of CU-CPs. In this case, the plurality of CU-CPs serve as backups for each other. During actual application, only one CU-CP runs at a moment. It should be understood that, for an architecture of the RAN device divided into the CU and the DU, the foregoing protocol stack division manner in which the RAN device is divided into the CU and the DU is merely an example, and the RAN device may alternatively be divided into the CU and the DU in another division manner. For example, the CU may be responsible for operations of the RRC layer, the SDAP layer, the PDCP layer, and the RLC layer, and the DU is responsible for operations of the MAC layer and the PHY layer. Alternatively, the CU is responsible for operations of the RRC layer and the SDAP layer, and the DU is responsible for operations of the PDCP layer, the RLC layer, the MAC layer, and the PHY layer. Similarly, the protocol stack division manner in which the CU is divided into the CU-CP and the CU-UP is also changeable. This is not specifically limited in this application.

For ease of understanding, several concepts in embodiments of this application are first described. It should be understood that the following concept explanations may be limited due to a specific case in embodiments of this application, but it does not indicate that this application is limited to the specific case. The following concept explanations may also vary with specific cases in different embodiments.

System information (system information, SI): The SI usually includes a master information block (master information block, MIB) and a plurality of system information blocks (system information blocks, SIBs). The MIB and the SIBs may be broadcast at a same periodicity or different periodicities. The MIB is sent on a physical broadcast channel (physical broadcast channel, PBCH), and each SIB may be sent on a downlink shared channel. The plurality of SIBs are classified into a SIB 1 and other SIBs, and the other SIBs include a SIB 2, a SIB 3, a SIB 4, and the like. Different SIBs include different content and have different functions. For example, the SIB 1 includes information required for initially accessing a system, the SIB 2 includes cell reselection information, the SIB 3 includes serving frequency information and neighboring cell information related to intra-frequency cell reselection, and the SIB 4 includes other frequency information and neighboring cell information related to inter-frequency cell reselection.

Base component carrier (base component carrier, BCC) cell: The BCC cell is a cell that periodically sends public broadcast signaling. The public broadcast signaling includes a synchronization signal and SI, and the public broadcast signaling may further include paging signaling and the like. Specifically, a RAN device that controls the BCC cell periodically sends the public broadcast signaling on a resource corresponding to a carrier of the BCC cell. For ease of description, in the following descriptions, that a RAN device that controls a cell broadcasts a signal/message is also referred to as that the cell broadcasts the signal/message. Because the BCC cell broadcasts the SI, the BCC cell allows access of a terminal device. The terminal device reads the SI to obtain necessary information for accessing the BCC cell, and therefore may access the BCC cell.

Data component carrier (data component carrier, DCC) cell: The DCC cell is a cell that does not send at least a part of public broadcast signaling on a resource corresponding to a carrier of the DCC cell, for example, does not send SI or sends a part of SI. The DCC cell may not send paging signaling and the like either. Because sending content of the public broadcast signaling is reduced, transmitting time and/or transmit power of the DCC cell may be reduced, so that energy is saved. Because the DCC cell does not send necessary SI for accessing the DCC cell, the DCC cell does not allow access of a new terminal device, but may provide data transmission for a terminal device that has accessed the DCC cell. It should be noted that the terminal device that has accessed the DCC cell may obtain, in another manner, the necessary SI for accessing the DCC cell, or access the cell before the DCC cell is converted from a BCC cell to the DCC cell. Further, the DCC cell may not send the public broadcast signaling at all, that is, not send a synchronization signal and the SI, so that energy is further saved.

Synchronization signal block (synchronization signal block, SSB): The SSB includes a primary synchronization signal (primary synchronization signal, PSS), a secondary synchronization signal (secondary synchronization signal, SSS), and a physical broadcast channel (physical broadcast channel, PBCH). The SSB occupies four symbols in time domain, occupies 240 subcarriers in frequency domain, and may be broadcast at a periodicity of 5 ms to 160 ms. The PSS is transmitted on the first OFDM symbol of the SSB and occupies 127 subcarriers. The SSS is transmitted on the third OFDM symbol of the SSB and also occupies 127 subcarriers. The PBCH is transmitted on the second OFDM symbol and the fourth OFDM symbol of the SSB and occupies 240 subcarriers. In addition, the PBCH is also transmitted by using 48 subcarriers on both sides of the SSS. It should be noted that a resource for transmitting the PBCH further includes a demodulation reference signal (demodulation reference signal, DMRS) for demodulating the PBCH. In addition, in a multi-beam scenario, each beam may correspond to one SSB, and SSBs of different beams may be sent in a time division multiplexing manner through beam sweeping. A set of SSBs of a plurality of beams is referred to as an SS burst set (SS burst set). In this case, the broadcast periodicity of the SSB is a broadcast periodicity of an SSB of one beam, and one SS burst set is always sent within 5 ms.

For initial access in NR, after entering a coverage area of a mobile network, UE first performs SSB-based cell search, obtains a physical cell identifier (physical cell identifier, PCI) and implements frequency synchronization and downlink time synchronization through PSS and SSS detection, and can obtain a MIB by decoding a PBCH. The MIB includes a small amount of information required for the terminal to obtain remaining system information broadcast by the network, for example, a system frame number, an SSB time index, a DMRS location, and a SIB 1 configuration. A MIB configuration provides a search space, a control resource set (control resource set, CORESET), another parameter related to a physical downlink control channel (physical downlink control channel, PDCCH), and the like that are required for the UE to detect a SIB 1. The SIB 1 is also referred to as remaining minimum system information (remaining minimum system information, RMSI). The RMSI includes system information that the UE needs to know for accessing the network, for example, information that the UE needs to know for random access, that is, necessary SI for accessing a cell. For ease of description, in the following descriptions, the SIB 1 is equivalent to the RMSI, and the SIB 1 and the RMSI may be used interchangeably. The NR cell usually periodically broadcasts the RMSI, so that the UE can access the network. Other system information (other system information, OSI) in SIBs other than the SIB 1 includes system information that the UE does not need to know before accessing a system. The OSI may be broadcast periodically, or may be transmitted on demand (on demand), that is, sent only when the UE requests the OSI. It should be noted that, for a DCC cell that does not send the RMSI, a MIB of the DCC cell may not include the SIB 1 configuration.

FIG. 3 is a schematic diagram of a difference between information sent in physical frames of BCC and DCC cells in NR. (a) in FIG. 3 shows information sent in a physical frame of a BCC cell. The physical frame may correspond to one subframe or one slot, and the information may be sent periodically. In the physical frame, the BCC cell broadcasts public broadcast signaling, for example, an SSB, RMSI, and OSI, and may provide access for a terminal device. (b) to (d) in FIG. 3 show three types of DCC cells. A DCC 1 cell corresponding to (b) in FIG. 3 broadcasts a part of public broadcast signaling, for example, an SSB, but does not broadcast RMSI and OSI. A DCC 2 cell corresponding to (c) in FIG. 3 broadcasts an SSB and OSI, but does not broadcast RMSI. A DCC 3 cell corresponding to (d) in FIG. 3 does not broadcast public broadcast signaling. It should be noted that sending of various types of public broadcast signaling in (a) to (d) in FIG. 3 is an example, and specific physical resources used by the cells to send these types of public broadcast signaling are not described in detail. In (a) to (c) in FIG. 3, in addition to physical frame resources occupied by the public broadcast signaling, other unmarked physical frame resources may be used for data transmission and transmission of other control signaling. In an actual communication system, in a possible scenario, a BCC cell is used as a coverage layer of a heterogeneous network and mainly provides control plane data transmission and small-capacity user plane data transmission, and a DCC cell is used as a capacity layer of the heterogeneous network and mainly provides large-capacity user plane data transmission. Coverage of the DCC cell is less than that of the BCC cell, and the capacity layer is superimposed on the coverage layer. In this case, the DCC cell may provide data plane transmission. Because RMSI is not broadcast, a quantity of periodic public broadcast signaling is reduced, and therefore energy is saved. In another possible scenario, a BCC cell and a DCC cell jointly provide data transmission for a terminal device, to implement dual connectivity between the terminal device and a network. For example, in FIG. 1, the terminal device 120 is connected to both the RAN device 140 and the RAN device 142. In this case, the DCC cell may be used as a secondary cell (group) of the BCC cell to coordinately provide data transmission for the terminal device, and the DCC cell does not allow access of the terminal device, so that a quantity of control plane signaling is reduced, and therefore energy is saved. Another BCC cell application scenario may exist. This is not specifically limited in this application.

Because the DCC cell does not send the RMSI, the terminal device cannot access the DCC cell. Therefore, in a current technology, when UE needs to access a network, the UE cannot access the network by using a DCC cell to improve a network capacity and quality of service of the UE. Therefore, embodiments of this application provide a technical solution for transferring system information. Further, the technical solution in embodiments of this application is further applied to an architecture of a RAN device having a CU and a DU. The CU may further include a CU-CP and a CU-UP that are separated.

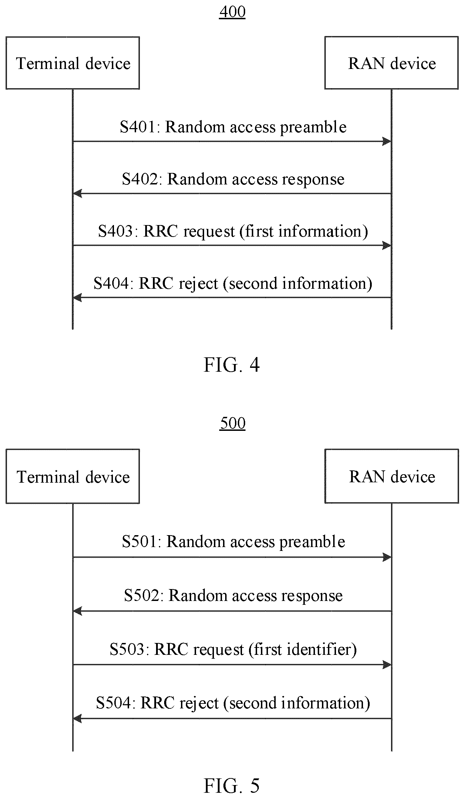

This specification specifically provides the following several embodiments. The following describes in detail the technical solutions of this application with reference to FIG. 4 to FIG. 9 by using specific method embodiments. The following several specific embodiments may be combined with each other, and a same or similar concept or process may not be described repeatedly in some embodiments. It should be understood that, FIG. 4 to FIG. 9 are schematic flowcharts of the method embodiments of this application, and show detailed communication steps or operations of methods. However, these steps or operations are merely examples. Other operations or variants of various operations in FIG. 4 to FIG. 9 may be further performed in embodiments of this application. In addition, the steps in FIG. 4 to FIG. 9 may be separately performed in orders different from those presented in FIG. 4 to FIG. 9, and it is possible that not all the operations in FIG. 4 to FIG. 9 need to be performed.

In a possible implementation, when a terminal device in an RRC idle state attempts to access a BCC cell, the BCC cell sends SI of a DCC cell to the terminal device. This implementation may be applied to a scenario in which the terminal device expects to access the DCC cell, but because the DCC cell does not send system information required for initially accessing the DCC cell, the terminal device can only attempt to access the BCC cell and notify, when accessing the BCC cell, a network of the DCC cell that the terminal device expects to access.

FIG. 4 is a schematic flowchart of a method in which a terminal device randomly accesses a RAN device and establishes a radio resource control (radio resource control, RRC) connection according to an embodiment of this application. The method 400 may be applied to a scenario in which the terminal device randomly accesses an eNB in LTE, or may be applied to a scenario in which the terminal device randomly accesses an ng-eNB in eLTE, a gNB in NR, or the like. A procedure in FIG. 4 includes the following steps.

S401: The terminal device sends a random access preamble to the RAN device.

Correspondingly, the RAN device receives the random access preamble from the terminal device.

In this step, the terminal device sends the random access preamble to the RAN device to attempt to access a cell controlled by the RAN device. It should be noted that the RAN device controls one or more BCC cells, and the cell that the terminal device attempts to access is a BCC cell.

Usually, the terminal device randomly selects a random access preamble from a random access preamble set, and selects an appropriate physical random access channel (physical random access channel, PRACH) resource from a preconfigured PRACH resource pool to send the random access preamble to the RAN device. For ease of description, in the following descriptions, that the terminal device sends a signal or information to the RAN device that controls the BCC cell may also be referred to as that the terminal device sends the signal or the information to the BCC cell.

It should be noted that the terminal device is in an RRC idle state before performing step S401. When the terminal device receives paging from a network side or needs to initiate a service, the terminal device performs step S401 to access the cell and establish the RRC connection.

S402: The RAN device sends a random access response to the terminal device.

Correspondingly, the terminal device receives the random access response from the RAN device.

After receiving the random access preamble sent by the terminal device, the RAN device calculates, based on time at which the random access preamble is received, a sending timing advance (timing advance, TA) of the terminal device, and sends, to the UE by using the random access response, the TA and an uplink resource grant that is allocated to the terminal device for sending an RRC request. For ease of description, in the following descriptions, that the RAN device that controls the BCC cell sends a signal or information to the terminal device may also be referred to as that the BCC cell sends the signal or the information to the terminal device.

S403: The terminal device sends the RRC request message to the RAN device.

Correspondingly, the RAN device receives the RRC request message from the terminal device.

The RRC request message is used by the terminal device to request to establish the RRC connection to the RAN device. The RRC request message includes first information, and the first information indicates that the terminal device expects to access a DCC cell. Optionally, the first information may use a 1-bit information element to indicate whether the terminal device expects to access a DCC cell. For example, when a bit value is 1, it indicates that the terminal device expects to access a DCC cell. Alternatively, when a bit value is 0, it indicates that the terminal device expects to access a DCC cell.

Optionally, in this step, the terminal device randomly selects a number from a preset number range as an identifier (for example, a UE-Identity) of the terminal device, and sends the RRC request message to the RAN device based on the TA sent by the RAN device.

Optionally, the RRC request message is an RRC connection request (RRCConnectionRequest) message or an RRC setup request (RRCSetupRequest) message.

S404: The RAN device sends an RRC reject message to the terminal device.

Correspondingly, the terminal device receives the RRC reject message from the RAN device.

The RRC reject message is used by the RAN device to indicate that the RAN device rejects the RRC request of the terminal device. The RRC reject message includes second information, and the second information includes a cell identifier and a part of SI of a DCC cell. The part of the SI of the DCC cell includes RMSI of the DCC cell, and may further include OSI of the DCC cell. It should be noted that the second information may include a cell identifier and a part of SI of each of one or more DCC cells. For ease of description, in the following descriptions, the part of the SI of the DCC cell includes the RMSI of the DCC cell, and may further include the OSI of the DCC cell.

Optionally, the RRC reject message is an RRC reject (RRCReject) message or an RRC connection reject (RRCConnectionReject) message.

It should be noted that, in the foregoing steps S401 to S404, the terminal device performs contention-based random access. To be specific, if a plurality of terminal devices select a same random access preamble and send the random access preamble on a same PRACH resource in step S401, a conflict may occur during random access of these terminal devices, and contention resolution needs to be performed. A terminal device succeeding in contention correctly receives the message in step S404, and a terminal device failing in contention cannot decode the message in step S404 and needs to initiate random access again. The foregoing steps S401 and S402 are optional, and are used in a process in which the terminal device randomly accesses the RAN device. If the terminal device accesses the RAN device in another manner and establishes the RRC connection, steps S401 and S402 may not be performed.

In another implementation, in step S403, the first information included in the RRC request message indicates one or more DCC cells. For example, the first information may include cell identifiers of the one or more DCC cells. In this case, the first information is equivalent to indicating a DCC cell (or DCC cells) that the terminal device expects to access. For example, before accessing the BCC cell, the terminal device finds a DCC cell. In this way, when establishing the RRC connection to the BCC cell, the terminal device may include a cell identifier of the DCC cell in the RRC request message, to indicate that the terminal device expects to access the DCC cell. Correspondingly, in step S404, the second information includes a cell identifier and a part of SI of each of the one or more DCC cells. Optionally, the second information includes only the part of the SI of each of the one or more DCC cells. For example, when the first information includes a cell identifier of one DCC cell, the second information does not include the cell identifier of the DCC cell. Alternatively, when the first information includes cell identifiers of a plurality of DCC cells, and an arrangement order of parts of SI of the plurality of DCC cells in the second information is consistent with an arrangement order of the cell identifiers of the plurality of DCC cells in the first information, the second information may not include the cell identifiers of the plurality of DCC cells either. It should be noted that, in step S404, information about one or more DCC cells that is included in the second information may be a part or all of information about one or more DCC cells that is included in the first information. In addition, the information about the one or more DCC cells that is included in the second information may alternatively not correspond to the one or more DCC cells indicated by the first information. For example, if the first information includes an identifier of a second cell A and an identifier of a second cell B, information about a second cell that is included in the second information may include information about the second cell A or the second cell B, may include information about the second cell A and the second cell B, or may include information about a second cell C.

When the RAN device is in a CU-DU split architecture, a part of messages in steps S401 to S404 are exchanged between the terminal device and a DU, and a part of messages are exchanged between the terminal device and a CU. Specifically, in step S401, the terminal device sends the random access preamble to the DU that the terminal device attempts to access. In step S402, the DU sends the random access response to the terminal device. In step S403, the terminal device sends, through the DU, the RRC request to the CU connected to the DU. The terminal device sends the RRC request to the DU through an air interface, and then the DU sends the RRC request to the CU through an F1-C interface. In step S404, the CU sends the RRC reject to the terminal device through the DU. The CU sends the RRC reject to the DU through the F1-C interface, and then the DU sends the RRC reject to the terminal device through the air interface. When the CU is further divided into a CU-CP and a CU-UP, steps S403 and S404 show interaction between the terminal device and the CU-CP of the CU.

In the foregoing steps in this embodiment of this application, the UE obtains the part of the SI of the DCC cell when accessing a RAN device, so that the UE is enabled to access the DCC cell.

Optionally, after receiving the second information in step S404, the terminal device may perform a cell reselection procedure and select an appropriate cell for access. The appropriate cell may be a BCC cell or a DCC cell. For example, a BCC cell controlled by the eNB broadcasts a cell-specific reference signal (cell-specific reference signal, CRS), or a DCC cell controlled by the gNB broadcasts an SSB. If the terminal device detects that a signal strength of a DCC cell is higher than a CRS strength of the BCC cell that the terminal device attempts to access, the terminal device may attempt to access the DCC cell. A criterion for selecting the appropriate cell by the terminal device may be: selecting the appropriate cell based on a reference signal strength of each cell. Alternatively, another criterion may be used. For example, the terminal device preferentially chooses to access a DCC cell. This is not specifically limited in this application.

FIG. 5 is a schematic flowchart of another method in which a terminal device randomly accesses a RAN device and establishes an RRC connection according to an embodiment of this application. The method 500 may be applied to a scenario in which the terminal device randomly accesses an eNB in LTE, or may be applied to a scenario in which the terminal device randomly accesses an ng-eNB in eLTE, a gNB in NR, or the like. A procedure in FIG. 5 includes the following steps.

S501: The terminal device sends a random access preamble to the RAN device.

Correspondingly, the RAN device receives the random access preamble from the terminal device.

S502: The RAN device sends a random access response to the terminal device.

Correspondingly, the terminal device receives the random access response from the RAN device.

Steps S501 and S502 are similar to steps S401 and S402 in the foregoing embodiment. Details are not described herein again. It should be noted that steps S501 and S502 are also optional.

S503: The terminal device sends an RRC request message to the RAN device.

Correspondingly, the RAN device receives the RRC request message from the terminal device.

The RRC request message is used by the terminal device to request to establish the RRC connection to the RAN device. The RRC request message includes a first identifier, and the first identifier includes at least a part of an identifier of the terminal device. For example, the first identifier includes at least a part of a temporary terminal device identifier provided by a 5G core network for the terminal device. It should be noted that if the terminal device has registered with the 5G core network before step S501, the 5G core network allocates a temporary terminal device identifier to the terminal device for a tracking area with which the terminal device registers, for example, allocates a 5G system architecture evolution temporary mobile subscription identifier (5G S-Temporary Mobile Subscription Identifier, 5G-S-TMSI). In this step, the first identifier includes at least a part of the 5G-S-TMSI, that is, the first identifier may include a part or all of the 5G-S-TMSI, and may further include other information.

Optionally, the RRC request message may be an RRC connection request (RRCConnectionRequest) message or an RRC setup request (RRCSetupRequest) message.

S504: The RAN device sends an RRC reject message to the terminal device.

Correspondingly, the terminal device receives the RRC reject message from the RAN device.

Step S504 is similar to step S404 in the foregoing embodiment. Details are not described herein again.

When the RAN device is in a CU-DU split architecture, similar to the embodiment of FIG. 4, steps S501 and S502 show interaction between the terminal device and a DU, and steps S503 and S504 show interaction between the terminal device and a CU. When the CU is further divided into a CU-CP and a CU-UP, steps S503 and S504 show interaction between the terminal device and the CU-CP of the CU.

In the foregoing steps in this embodiment of this application, the terminal device obtains a part of SI of a DCC cell when accessing a RAN device, so that the terminal device is enabled to access the DCC cell. Because the terminal device has registered with the 5G core network, the terminal device only needs to include the first identifier of the terminal device in the RRC request, so that air interface signaling overheads are reduced.

Optionally, after receiving second information in step S504, the terminal device may perform a cell reselection procedure and select an appropriate cell for access. The appropriate cell may be a BCC cell or a DCC cell. For example, a BCC cell controlled by the eNB broadcasts a CRS, or a DCC cell controlled by the gNB broadcasts an SSB. If the terminal device detects that a signal strength of a DCC cell is higher than a CRS strength of a BCC cell that the UE attempts to access, the terminal device may attempt to access the DCC cell. A criterion for selecting the appropriate cell by the terminal device may be: selecting the appropriate cell based on a reference signal strength of each cell. Alternatively, another criterion may be used. For example, the terminal device preferentially chooses to access a DCC cell. This is not specifically limited in this application.

In the embodiments shown in FIG. 4 and FIG. 5, the terminal device obtains the part of the SI of the DCC cell in a process of accessing the BCC cell and establishing the RRC connection, to access the DCC cell. In another possible implementation, when the terminal device is in an RRC connected state, that is, the terminal device has established an RRC connection to the BCC cell, the terminal device may request to obtain the part of the SI of the DCC cell from the BCC cell, or the BCC cell may actively send the part of the SI of the DCC cell to the terminal device.

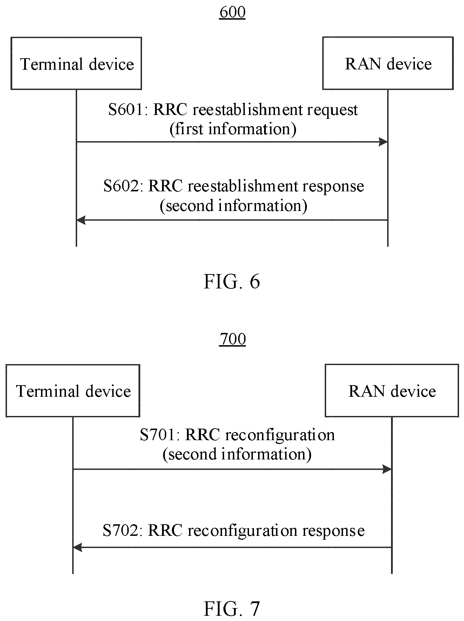

FIG. 6 is a schematic flowchart of a method in which a terminal device requests a RAN device to send a part of SI of a DCC cell according to an embodiment of this application. For example, due to a quality of service (quality of service, QoS) requirement of a service, the terminal device in an RRC connected state expects an RRC connection of a BCC cell to be switched to an RRC connection of a DCC cell, or expects an RRC connection of a DCC cell to be added. In this case, the terminal device may request the BCC cell to send a part of SI of a DCC cell. The method 600 may be applied to interaction between the terminal device and an eNB in LTE, an ng-eNB in eLTE, or a gNB in NR. A procedure in FIG. 6 includes the following steps.

S601: The terminal device sends an RRC reestablishment request message to the RAN device.

Correspondingly, the RAN device receives the RRC reestablishment request message from the terminal device.

The RRC reestablishment request is used by the terminal device to request to reestablish an RRC connection to the RAN device. The RRC reestablishment request message includes first information, and the first information indicates that the terminal device expects to access a DCC cell. It should be noted that before sending the RRC reestablishment request message to the RAN device, the terminal device has established an RRC connection to a BCC cell controlled by the RAN device, and requests to reestablish the RRC connection to the BCC cell in this step. Optionally, the first information may use a 1-bit information element to indicate whether the terminal device expects to access a DCC cell. For example, when a bit value is 1, it indicates that the terminal device expects to access a DCC cell. Alternatively, when a bit value is 0, it indicates that the terminal device expects to access a DCC cell.

Optionally, the RRC reestablishment request message is an RRC reestablishment request (RRCReestablishmentRequest) message or an RRC connection reestablishment request (RRCConnectionReestablishmentRequest) message.

S602: The RAN device sends an RRC reestablishment response message to the terminal device.

Correspondingly, the terminal device receives the RRC reestablishment response message from the RAN device.

In response to the RRC reestablishment request, the RRC reestablishment response message includes second information, and the second information includes a cell identifier and a part of SI of a DCC cell. It should be noted that the second information may include a cell identifier and a part of SI of each of one or more DCC cells.

Optionally, the RRC reestablishment response message is an RRC reestablishment (RRCReestablishment) message, an RRC setup (RRCSetup) message, an RRC connection reestablishment (RRCConnectionReestablishment) message, or an RRC connection reestablishment reject (RRCConnectionReestablishmentReject) message.

In another implementation, in step S601, the first information included in the RRC reestablishment request message indicates one or more DCC cells. For example, the first information may include cell identifiers of the one or more DCC cells. In this case, the first information is equivalent to indicating a DCC cell (or DCC cells) that the terminal device expects to access. For example, before RRC reestablishment, the terminal device finds or detects a DCC cell. In this way, when performing RRC reestablishment with the BCC cell, the terminal device may include a cell identifier of the DCC cell in the RRC reestablishment request message, to indicate that the terminal device expects to access the DCC cell. Correspondingly, in step S602, the second information includes a cell identifier and a part of SI of each of the one or more DCC cells. Optionally, the second information includes only the part of the SI of each of the one or more DCC cells. For example, when the first information includes a cell identifier of one DCC cell, the second information does not include the cell identifier of the DCC cell. Alternatively, when the first information includes cell identifiers of a plurality of DCC cells, and an arrangement order of parts of SI of the plurality of DCC cells in the second information is consistent with an arrangement order of the cell identifiers of the plurality of DCC cells in the first information, the second information may not include the cell identifiers of the plurality of DCC cells either. It should be noted that, in step S602, information about one or more DCC cells that is included in the second information may be a part or all of information about one or more DCC cells that is included in the first information. In addition, the information about the one or more DCC cells that is included in the second information may alternatively not correspond to the one or more DCC cells indicated by the first information. For example, if the first information includes an identifier of a second cell A and an identifier of a second cell B, information about a second cell that is included in the second information may include information about the second cell A or the second cell B, may include information about the second cell A and the second cell B, or may include information about a second cell C.

When the RAN device is in a CU-DU split architecture, steps S601 and S602 show interaction between the terminal device and a CU, and the CU is connected to a DU that has established an RRC connection with the terminal device. Specifically, in step S601, the terminal device sends the RRC reestablishment request to the CU through the DU. The terminal device sends the RRC reestablishment request to the DU through an air interface, and then the DU sends the RRC reestablishment request to the CU through an F1-C interface. In step S602, the CU sends the RRC reestablishment response to the terminal device through the DU. The CU sends the RRC reestablishment response to the DU through the F1-C interface, and then the DU sends the RRC reestablishment response to the terminal device through the air interface. When the CU is further divided into a CU-CP and a CU-UP, steps S601 and S602 show interaction between the terminal device and the CU-CP of the CU.

In the foregoing steps in this embodiment of this application, the terminal device in the RRC connected state actively requests to obtain the part of the SI of the DCC cell, so that the terminal device is enabled to access the DCC cell.

FIG. 7 is a schematic flowchart of a method in which a RAN device actively sends a part of SI of a DCC cell to a terminal device according to an embodiment of this application. For example, with reference to a QoS requirement of a service of the terminal device, because a load is excessively high, a BCC cell expects the terminal device to be handed over to a DCC cell, or expects a DCC cell to be added to provide a service for the terminal device. In this case, the BCC cell actively sends a part of SI of the DCC cell to the terminal device in an RRC connected state. The method 700 may be applied to interaction between the terminal device and an eNB in LTE, an ng-eNB in eLTE, or a gNB in NR. A procedure in FIG. 7 includes the following steps.

S701: The RAN device sends an RRC reconfiguration message to the terminal device.

Correspondingly, the terminal device receives the RRC reconfiguration message from the RAN device.

The RRC reconfiguration is for modifying an RRC connection of the terminal device, for example, establishing/modifying/releasing a radio bearer, establishing/modifying/releasing measurement, or adding/modifying/deleting a secondary cell. The RRC reconfiguration message includes second information, and the second information includes a cell identifier and a part of SI of a DCC cell. It should be noted that the second information may include a cell identifier and a part of SI of each of one or more DCC cells. Before the RAN device sends the RRC reconfiguration message to the terminal device, the terminal device has established an RRC connection to a BCC cell controlled by the RAN device, and the BCC cell initiates RRC reconfiguration to the terminal device in this step.

Optionally, the RRC reconfiguration message is an RRC reconfiguration (RRCReconfiguration) message or an RRC connection reconfiguration (RRCConnectionReconfiguration) message.

S702: The terminal device sends an RRC reconfiguration response message to the RAN device.

Correspondingly, the RAN device receives the RRC reconfiguration response message from the terminal device.

The terminal device confirms, by using a response for the RRC reconfiguration message, whether the RRC reconfiguration message is successfully received. Optionally, the response is included in an RRC reconfiguration complete (RRCReconfigurationComplete) message, or may be included in an RRC connection reconfiguration complete (RRCConnectionReconfigurationComplete) message, or may be included in an RRC connection reestablishment (RRC connection reestablishment) message.

When the RAN device is in a CU-DU split architecture, similar to the embodiment of FIG. 6, steps S701 and S702 show interaction between the terminal device and a CU, and the CU is connected to a DU that has established an RRC connection with the terminal device. When the CU is further divided into a CU-CP and a CU-UP, steps S701 and S702 show interaction between the terminal device and the CU-CP of the CU.

In the foregoing steps in this embodiment of this application, the BCC cell actively sends the SI of the DCC cell to the terminal device in the RRC connected state, so that the terminal device is enabled to access the DCC cell.

There is another implementation in which the BCC cell actively sends the part of the SI of the DCC cell to the terminal device in the RRC connected state, that is, the BCC cell sends an RRC release message to the terminal device. The RRC release message includes the second information. Optionally, the RRC release message is an RRC release (RRCRelease) message or an RRC connection release (RRCConnectionRelease) message.

In the foregoing embodiment, the terminal device interacts with the BCC cell by using RRC signaling, so that the terminal device can obtain the part of the SI of the DCC cell, and therefore the terminal device is enabled to access the DCC cell. In still another possible implementation, the BCC cell may send the part of the SI of the DCC cell in a broadcast manner. Specifically, the BCC cell includes the cell identifier and the part of the SI of the DCC cell (that is, the second information) in SI of the BCC cell for broadcast, or the BCC cell broadcasts the second information by using another broadcast channel. How the BCC cell broadcasts the second information is not specifically limited in this embodiment of this application. It should be noted that the BCC cell may broadcast a cell identifier and a part of SI of each of one or more DCC cells. For example, when the BCC cell broadcasts the part of the SI of the DCC cell by using the SI of the BCC cell, the BCC cell needs to modify the SI of the BCC cell, and indicates the terminal device to read modified SI. The SI of the BCC cell includes a configuration of an SI modification periodicity. Optionally, the BCC cell indicates, by using a PDCCH, modification of the SI of the BCC cell to the terminal device. After receiving the indication, the terminal device reads, in a next SI modification periodicity, the modified SI, that is, SI that is of the BCC cell and that includes the second information.

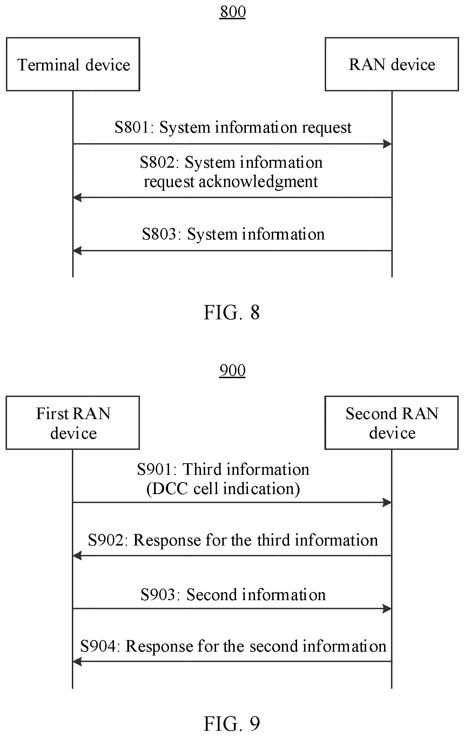

In yet another possible implementation, when randomly accessing the BCC cell, the terminal device sends a specific random access preamble to obtain the second information. The specific random access preamble refers to a preamble for requesting SI, and the specific random access preamble may be for requesting the SI of the DCC cell, and also SI of the BCC cell. In this implementation, a first random access preamble set used by the terminal device to request to obtain the SI of the BCC cell and/or the SI of the DCC cell may be preconfigured according to a standard protocol, by using subscription information of the terminal device, or in another manner. Optionally, the terminal device sends the specific random access preamble on a specific PRACH resource, and the specific PRACH resource is also preconfigured. The terminal device and the RAN device obtain the first random access preamble set in advance, and may further obtain, in advance, a PRACH resource pool used by the terminal device to send the specific random access preamble. When the terminal device randomly accesses the BCC cell, the terminal device selects the specific random access preamble from the first random access preamble set, and sends the specific random access preamble to the RAN device on the specific PRACH resource. The selection may mean that the terminal device randomly selects a random access preamble from the first random access preamble set, the RAN device preconfigures the random access preamble to the terminal device, or the terminal device selects the random access preamble by using another criterion. This is not specifically limited in this application. Optionally, after correctly receiving the specific random access preamble, the RAN device learns that the terminal device requests to obtain the SI of the BCC cell and/or the SI of the DCC cell. FIG. 8 is a schematic flowchart of a method in which a terminal device requests SI of a DCC cell from a RAN device according to an embodiment of this application. A procedure of the method 800 includes the following steps.

S801: The terminal device sends an SI request to the RAN device.

Correspondingly, the RAN device receives the SI request from the terminal device.

In this step, the terminal device selects a specific random access preamble, and sends the specific random access preamble to the RAN device.

It should be noted that step S801 is similar to step S401, and a main difference lies in that the specific random access preamble sent by the terminal device to the RAN device in this step is for requesting SI. Usually, the terminal device sends the SI request to the RAN device, to request SI of a DCC cell. Specifically, the SI request may be for requesting RMSI of the DCC cell, and further, may be for requesting OSI of the DCC cell. Optionally, the SI request may be further for requesting SI of a BCC cell controlled by the RAN device, for example, requesting a SIB other than a SIB 1 in the SI of the BCC cell.

S802: The RAN device sends an SI request acknowledgment to the terminal device.

Correspondingly, the terminal device receives the SI request acknowledgment from the RAN device.

In this step, the RAN device sends a random access response to the terminal device, and the random access response indicates an acknowledgment for the SI request (acknowledgment for SI request).

Optionally, the RAN device only includes a random access preamble identifier (random access preamble identifier, RAPID) of the UE in the random access response for a sub-PDU at a MAC layer of the terminal device, to indicate the acknowledgment for the SI request of the terminal device.

S803: The RAN device sends the SI to the terminal device.

Correspondingly, the terminal device receives the SI from the RAN device.

In this step, the RAN device sends the SI to the UE on a scheduled resource. The SI includes at least a cell identifier and a part of SI of each of one or more DCC cells. Optionally, the SI may further include the SIB other than the SIB 1 in the SI of the BCC cell controlled by the RAN device.

When the RAN device is in a CU-DU split architecture, a part of messages in steps S801 to S803 are exchanged between the terminal device and a DU, and a part of messages are exchanged between the terminal device and a CU. Specifically, in step S801, the terminal device sends the system information request to the DU. In step S802, the DU sends the system information request acknowledgment to the terminal device. If the system information is stored in the CU connected to the DU, in step S803, the CU connected to the DU sends the system information to the terminal device through the DU. The CU sends the system information to the DU through an F1-C interface, and then the DU sends the system information to the terminal device through an air interface. If the CU is further divided into a CU-CP and a CU-UP, in step S803, the CU-CP of the CU sends the system information to the terminal device through the DU. If the system information is stored in the DU, in step S803, the DU sends the system information to the terminal device.

In the foregoing steps in this embodiment of this application, the terminal device quickly obtains the part of the SI of the DCC cell, so that the terminal device is enabled to access the DCC cell. The terminal device may obtain the part of the SI of the DCC cell before establishing an RRC connection. Therefore, time for obtaining the part of the SI of the DCC cell by the terminal device is shortened, and time for accessing a network by the terminal device is shortened.

The foregoing plurality of embodiments describe a plurality of manners in which the terminal device obtains the part of the SI of the DCC cell from the BCC cell. It should be noted that, before the RAN device that controls the BCC cell sends the part of the SI of the DCC cell to the UE, the RAN device has obtained parts of SI of one or more DCC cells. The one or more DCC cells may have a neighboring cell relationship with the BCC cell. Coverage of the DCC cell may partially or completely overlap with coverage of the BCC cell. The RAN device may obtain the part of the SI of the DCC cell in a plurality of manners. For example, the RAN device may obtain the part of the SI of the DCC cell through an operation, administration and maintenance (operation, administration and maintenance, OAM) system, and store the part of the SI. Alternatively, an inter-cell interface (for example, an X2 interface or an Xn interface) is established between the BCC cell controlled by the RAN device and the neighboring DCC cell and is updated in a running process, and the RAN device may obtain the part of the SI of the DCC cell through the inter-cell interface and store the part of the SI. The RAN device may alternatively obtain the part of the SI of the DCC cell in another manner and store the part of the SI. This is not specifically limited in this application.

FIG. 9 is a schematic flowchart of a method for exchanging information between a first RAN device that controls a DCC cell and a second RAN device that controls a BCC cell according to an embodiment of this application. A procedure of the method 900 includes the following steps.

S901: The first RAN device sends third information to the second RAN device, where the third information indicates that one or more cells controlled by the first RAN device are DCC cells.

Correspondingly, the second RAN device receives the third information from the first RAN device.

In this step, the first RAN device that controls the DCC cell indicates, to the second RAN device that controls the BCC cell, that the cell is a DCC cell. Usually, the DCC cell has a neighboring cell relationship with the BCC cell. The DCC cell may be any DCC cell shown in (b) to (d) in FIG. 3.

In a possible implementation, the third information may include a cell identifier of at least one DCC cell. In this way, after receiving the third information, the second RAN device knows which cell (or cells) controlled by the first RAN device is a DCC cell. The third information may alternatively be indicated by using other information that can identify a DCC cell identity. This is not specifically limited in this application. Further, the third information may further include information indicating a type of the DCC cell. For example, the DCC cell is a DCC cell that broadcasts an SSB but does not broadcast RMSI and OSI (as shown in (b) in FIG. 3), or the DCC cell is a DCC cell that broadcasts an SSB and OSI but does not broadcast RMSI (as shown in (c) in FIG. 3), or the DCC cell is a DCC cell that does not broadcast public broadcast signaling (as shown in (d) in FIG. 3). Optionally, for a DCC cell, the third information includes a 2-bit information element to indicate a type of the DCC cell.

In another possible implementation, the third information may be carried in an existing message that is exchanged between the RAN devices and that includes a cell identifier. For example, a cell identifier of at least one cell controlled by the first RAN device is included in an existing message sent by the first RAN device to the second RAN device. In this case, if a cell is a DCC cell, an information element may be added to the existing message in correspondence to a cell identifier of the cell, to indicate the third information. Specifically, the third information may be a 1-bit information element. For example, when a bit value is 1, it indicates that the cell is a DCC cell. Alternatively, when a bit value is 0, it indicates that the cell is a DCC cell. Further, the third information may include information indicating a type of the DCC cell.

The third information may be transferred when the first RAN device establishes a RAN side interface with the second RAN device, or may be transferred when interface information between the first RAN device and the second RAN device is updated. Optionally, the third information is included in an Xn setup request (Xn setup request) message, or may be included in an NG-RAN node configuration update (NG-RAN node configuration update) message.

S902: The second RAN device sends a response for the third information to the first RAN device.

Correspondingly, the first RAN device receives the response for the third information from the second RAN device.

The second RAN device confirms, by using the response for the third information, whether the third information sent by the first RAN device is successfully received. Optionally, the response may be included in an Xn setup response (Xn setup response) message, or may be included in an NG-RAN node configuration update acknowledge (NG-RAN node configuration update acknowledge) message.

It should be noted that step S902 is optional.

The second RAN device may store the third information that is correctly received.

In steps S901 and S902, the BCC cell may learn of a DCC cell surrounding the BCC cell, and further learn of a type of the DCC cell. This provides assistance information for the BCC cell to send a part of SI of the DCC cell to a terminal device.

S903: The first RAN device sends second information to the second RAN device.

Correspondingly, the second RAN device receives the second information from the first RAN device.

The second information includes a cell identifier and a part of SI of a DCC cell. The part of the SI of the DCC cell includes RMSI of the DCC cell, and may further include OSI of the DCC cell. It should be noted that the second information may include a cell identifier and a part of SI of each of one or more DCC cells controlled by the first RAN device.

Further, information about the part of the SI included in the second information in this step corresponds to the DCC cell type in S901. For example, for a DCC cell of the type shown in (b) in FIG. 3, the second information includes RMSI of the DCC cell, and may further include OSI; for a DCC cell of the type shown in (c) in FIG. 3, the second information includes RMSI of the DCC cell.

The second information may be transferred when the first RAN device establishes the RAN side interface with the second RAN device, or may be transferred when the interface information between the first RAN device and the second RAN device is updated. Optionally, the second information is included in an Xn setup request (Xn setup request) message, or may be included in an NG-RAN node configuration update (NG-RAN node configuration update) message.

S904: The second RAN device sends a response for the second information to the first RAN device.

Correspondingly, the first RAN device receives the response for the second information from the second RAN device.

The second RAN device confirms, by using the response for the second information, whether the second information sent by the first RAN device is successfully received. Optionally, the response may be included in an Xn setup response (Xn setup response) message, or may be included in an NG-RAN node configuration update acknowledge (NG-RAN node configuration update acknowledge) message.

It should be noted that step S904 is optional.

The second RAN device may store the second information that is correctly received.

In the foregoing steps S903 and S904, the BCC cell may learn of the part of the SI of the DCC cell, so that the BCC cell is enabled to send the part of the SI of the DCC cell to the terminal device.

It should be noted that step S901 and the optional step S902 are a first sub-procedure, and step S903 and the optional step S904 are a second sub-procedure. The first sub-procedure and the second sub-procedure may be performed independently. Alternatively, the foregoing two sub-procedures may be combined. To be specific, the first RAN device sends the third information and the second information to the second RAN device by using one message, and the second RAN device sends the response for the third information and the response for the second information to the first RAN device by using another message.

When the RAN device is in a CU-DU split architecture, in a possible implementation, the second information and the third information are stored in a CU connected to a DU that is in the first RAN device and that controls the DCC cell. In this case, in step S901, the CU connected to the DU that is in the first RAN device and that controls the DCC cell sends, through an Xn/X2 interface, the third information to a CU connected to a DU that is in the second RAN device and that controls the BCC cell. Optionally, the CU of the second RAN device sends the third information to the DU of the second RAN device through an F1-C interface. In step S902, the CU connected to the DU that is in the second RAN device and that controls the BCC cell sends, through the Xn/X2 interface, the response for the third information to the CU connected to the DU that is in the first RAN device and that controls the DCC cell. Optionally, the DU of the second RAN device sends the response for the third information to the CU of the second RAN device through the F1-C interface, and then the CU of the second RAN device sends the response for the third information to the CU of the first RAN device through the Xn/X2 interface. A process of transferring the second information in step S903 is similar to the process of transferring the third information in step S901, and a process of transferring the response for the second information in step S904 is similar to the process of transferring the response for the third information in step S902. Details are not described herein again in this application. In another possible implementation, the second information and the third information are stored in the DU that is in the first RAN device and that controls the DCC cell. In this case, in step S901, the DU that is in the first RAN device and that controls the DCC cell sends, through an F1-C interface, the third information to the CU connected to the DU, and then the CU of the first RAN device sends, through the Xn/X2 interface, the third information to the CU connected to the DU that is in the second RAN device and that controls the BCC cell. Optionally, the CU of the second RAN device sends the third information to the DU of the second RAN device through the F1-C interface. In step S902, the CU connected to the DU that is in the second RAN device and that controls the BCC cell sends, through the Xn/X2 interface, the response for the third information to the CU connected to the DU that is in the first RAN device and that controls the DCC cell, and then the CU of the first RAN device sends the response for the third information to the DU of the first RAN device through the F1-C interface. Optionally, the DU of the second RAN device sends the response for the third information to the CU of the second RAN device through the F1-C interface, then the CU of the second RAN device sends the response for the third information to the CU of the first RAN device through the Xn/X2 interface, and the CU of the first RAN device sends the response for the third information to the DU of the first RAN device through the Xn/X2 interface. A process of transferring the second information in step S903 is similar to the process of transferring the third information in step S901, and a process of transferring the response for the second information in step S904 is similar to the process of transferring the response for the third information in step S902. Details are not described herein again in this application. When the CU is further divided into a CU-CP and a CU-UP, steps performed by the CU in steps S901 to S904 are performed by the CU-CP of the CU. It should be noted that when one of the two RAN devices is in the CU-CP architecture, steps S901 to S904 show interaction between one RAN device and a CU of the other RAN device or a CU-CP of the other RAN device. Details are not described herein again in this application.

In the foregoing plurality of embodiments, the BCC cell obtains the part of the SI of the DCC cell, and may send the part of the SI of the DCC cell to the terminal device in a plurality of manners, so that the terminal device is enabled to access the DCC cell. In another implementation, a BCC cell may indicate a DCC cell to be converted into a BCC cell, which may also be referred to as that the BCC cell activates the DCC cell. For example, when a quantity of terminal devices accessing the BCC cell is very large and causes an excessively high load of the BCC cell, the BCC cell may indicate one or more neighboring DCC cells of the BCC cell to be converted into BCC cells, so that a part of terminal devices in a network may access the BCC cell converted from the DCC cell. Therefore, the load of the existing BCC cell is reduced, and QoS of the terminal device is also improved. Therefore, a second RAN device that controls the BCC cell may send fourth information to a first RAN device that controls the DCC cell, where the fourth information indicates the DCC cell to be converted into a BCC cell, or it may be considered that the fourth information is for activating the DCC cell. Optionally, the fourth information may include a cell identifier of the DCC cell. In this way, after receiving the fourth information, the first RAN device knows which DCC cell controlled by the first RAN device is to be converted into a BCC cell. The fourth information may alternatively be indicated by using other information that can identify the DCC cell. This is not specifically limited in this application. Optionally, the BCC cell may transfer the fourth information to the DCC cell by using an NG-RAN node configuration update (NG-RAN node configuration update) message. The DCC cell may further perform confirmation by using an NG-RAN node configuration update acknowledge (NG-RAN node configuration update acknowledge) message. When the RAN device is in a CU-DU split architecture, the fourth information may be exchanged between a DU of the first RAN device and a DU of the second RAN device, or may be exchanged between the DU of the first RAN device and a CU of the second RAN device, or may be exchanged between a CU of the first RAN device and the DU of the second RAN device, or may be exchanged between the CU of the first RAN device and the CU of the second RAN device. When the CU is further divided into a CU-CP and a CU-UP, operations performed by the CU are performed by the CU-CP of the CU. When one of the two RAN devices is in the CU-CP architecture, the foregoing operations show interaction between one RAN device and a DU of the other RAN device, a CU of the other RAN device, or a CU-CP of the other RAN device. Through this operation, the BCC cell may indicate the DCC cell to be converted into a BCC cell, so that access of the terminal device is enabled. This may help reduce the load of the existing BCC cell and improve quality of service of the terminal device.

Optionally, a BCC cell may also indicate another BCC cell to be converted into a DCC cell, which may also be referred to as that the BCC cell deactivates the another BCC cell. For example, when a quantity of terminal devices accessing the BCC cell is very small, and a network load is low, the BCC cell may indicate one or more neighboring BCC cells of the BCC cell to be converted into DCC cells, so that energy saving and network power consumption reduction are implemented for a part of BCC cells in a network. Therefore, a second RAN device that controls the BCC cell may send fifth information to a first RAN device that controls the another BCC cell, where the fifth information indicates the BCC cell to be converted into a DCC cell, or it may be considered that the fifth information is for deactivating the BCC cell. Optionally, the fifth information may include a cell identifier of the BCC cell. In this way, after receiving the fifth information, the first RAN device knows which BCC cell controlled by the first RAN device is to be converted into a DCC cell. The fifth information may alternatively be indicated by using other information that can identify the BCC cell. This is not specifically limited in this application. Optionally, the BCC cell may transfer the fifth information to the another BCC cell by using an NG-RAN node configuration update (NG-RAN node configuration update) message. The another BCC cell may further perform confirmation by using an NG-RAN node configuration update acknowledge (NG-RAN node configuration update acknowledge) message. When the RAN device is in a CU-DU split architecture, the fifth information may be exchanged between a DU of the first RAN device and a DU of the second RAN device, or may be exchanged between the DU of the first RAN device and a CU of the second RAN device, or may be exchanged between a CU of the first RAN device and the DU of the second RAN device, or may be exchanged between the CU of the first RAN device and the CU of the second RAN device. When the CU is further divided into a CU-CP and a CU-UP, operations performed by the CU are performed by the CU-CP of the CU. When one of the two RAN devices is in the CU-CP architecture, the foregoing operations show interaction between one RAN device and a DU of the other RAN device, a CU of the other RAN device, or a CU-CP of the other RAN device. Through this operation, the BCC cell may indicate the another BCC cell to be converted into a DCC cell, so that energy saving and network power consumption reduction are implemented for the another BCC cell.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like. A person skilled in the art may use different methods to implement the described functions for each particular application, but it should not be considered that the implementation goes beyond the scope of this patent application.

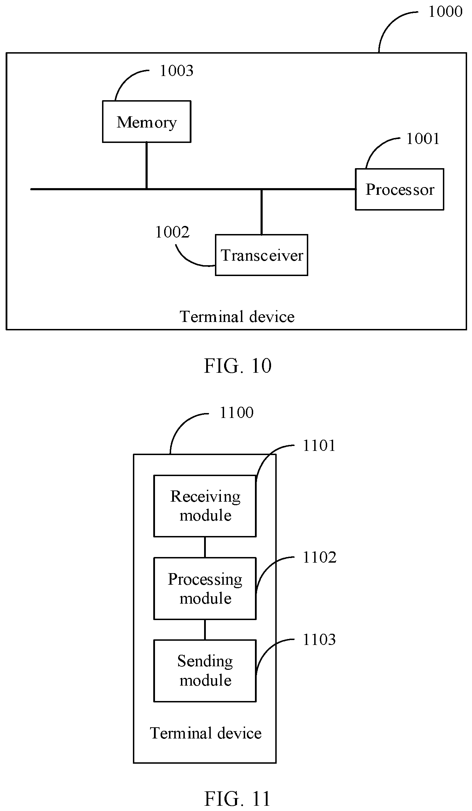

The foregoing describes in detail the method embodiments of this application with reference to FIG. 4 to FIG. 9. The following describes in detail apparatus embodiments of this application with reference to FIG. 10 to FIG. 15. It should be understood that, the apparatus embodiments and the method embodiments correspond to each other, and for a similar description, refer to the method embodiments. It should be noted that, the apparatus embodiments may be used in cooperation with the foregoing methods, or may be separately used.

FIG. 10 is a schematic block diagram of a terminal device 1000 according to an embodiment of this application. The terminal device 1000 may correspond to (for example, the terminal device 1000 may be configured as or may be) the terminal device described in the method 400, the terminal device described in the method 500, the terminal device described in the method 600, the terminal device described in the method 700, the terminal device described in the method 800, or a terminal device described in another implementation. The terminal device 1000 may include a processor 1001 and a transceiver 1002. The processor 1001 is communicatively coupled to the transceiver 1002. Optionally, the terminal device 1000 further includes a memory 1003. The memory 1003 is communicatively coupled to the processor 1001. Optionally, the processor 1001, the memory 1003, and the transceiver 1002 may be communicatively coupled to each other. The memory 1003 may be configured to store an instruction, and the processor 1001 is configured to execute the instruction stored in the memory 1003, to control the transceiver 1002 to receive and/or send information or a signal. The processor 1001 and the transceiver 1002 are separately configured to perform actions or processing processes performed by the terminal device described in the method 400, the terminal device described in the method 500, the terminal device described in the method 600, the terminal device described in the method 700, the terminal device described in the method 800, or the terminal device described in the another implementation. Herein, to avoid repetition, detailed descriptions are omitted.

FIG. 11 is another schematic block diagram of a terminal device 1100 according to an embodiment of this application. The terminal device 1100 may correspond to (for example, the terminal device 1100 may be configured as or may be) the terminal device described in the method 400, the terminal device described in the method 500, the terminal device described in the method 600, the terminal device described in the method 700, the terminal device described in the method 800, or a terminal device described in another implementation. The terminal device 1100 may include a receiving module 1101, a processing module 1102, and a sending module 1103. The processing module 1102 is communicatively coupled to the receiving module 1101 and the sending module 1103. The terminal device 1100 may be in a form shown in FIG. 10. The processing module 1102 may be implemented by using the processor 1001 in FIG. 10, and the receiving module 1101 and/or the sending module 1103 may be implemented by using the transceiver 1002 in FIG. 10. The terminal device 1100 may further include a storage unit, configured to store a program or data to be executed by the processing module 1102, or store information received by the receiving module 1101 and/or information sent by the sending module 1103. Modules or units in the terminal device 1100 are separately configured to perform actions or processing processes performed by the terminal device described in the method 400, the terminal device described in the method 500, the terminal device described in the method 600, the terminal device described in the method 700, the terminal device described in the method 800, or the terminal device described in the another implementation. Herein, to avoid repetition, detailed descriptions are omitted.

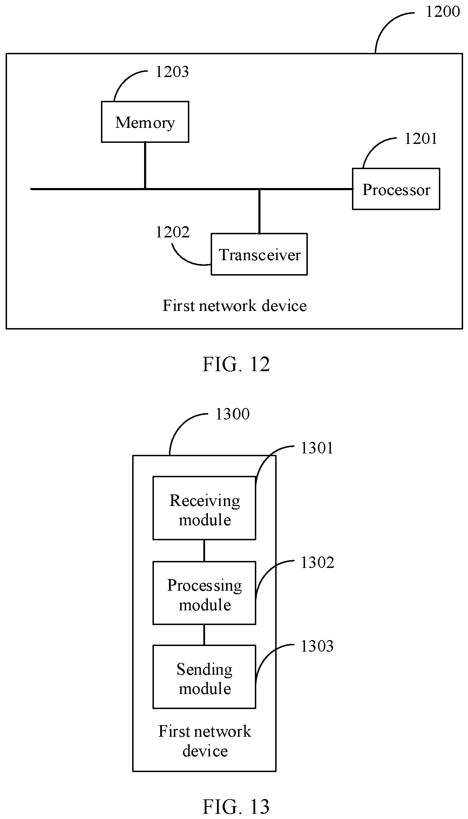

FIG. 12 is a schematic block diagram of a first RAN device 1200 according to an embodiment of this application. The first RAN device 1200 may correspond to (for example, the first RAN device 1200 may be configured as or may be) the first RAN device described in the method 900 or a RAN device that controls a DCC cell and that is described in another implementation. The first RAN device 1200 may include a processor 1201 and a transceiver 1202, and the processor 1201 is communicatively coupled to the transceiver 1202. Optionally, the first RAN device 1200 further includes a memory 1203. The memory 1203 is communicatively coupled to the processor 1201. Optionally, the processor 1201, the memory 1203, and the transceiver 1202 may be communicatively coupled. The memory 1203 may be configured to store an instruction. The processor 1201 is configured to execute the instruction stored in the memory 1203, to control the transceiver 1202 to receive and/or send information or a signal. The processor 1201 and the transceiver 1202 are separately configured to perform actions or processing processes performed by the first RAN device described in the method 900 or the RAN device that controls the DCC cell and that is described in the another implementation. Herein, to avoid repetition, detailed descriptions are omitted. When the first RAN device 1200 is in a CU-DU split architecture, the first RAN device 1200 shown in FIG. 12 may be a CU of the first RAN device 1200, a DU of the first RAN device 1200, or a CU-CP of the first RAN device 1200.

FIG. 13 is another schematic block diagram of a first RAN device 1300 according to an embodiment of this application. The first RAN device 1300 may correspond to (for example, the first RAN device 1300 may be configured as or may be) the first RAN device described in the method 900 or a RAN device that controls a DCC cell and that is described in another implementation. The first RAN device 1300 may include a receiving module 1301, a processing module 1302, and a sending module 1303. The processing module 1302 is communicatively coupled to the receiving module 1301 and the sending module 1303. The first RAN device 1300 may be in a form shown in FIG. 12. The processing module 1302 may be implemented by using the processor 1201 in FIG. 12, and the receiving module 1301 and/or the sending module 1303 may be implemented by using the transceiver 1202 in FIG. 12. The first RAN device 1300 may further include a storage unit, configured to store a program or data to be executed by the processing module 1302, or store information received by the receiving module 1301 and/or information sent by the sending module 1303. Modules or units in the first RAN device 1300 are separately configured to perform actions or processing processes performed by the first RAN device described in the method 900 or the RAN device that controls the DCC cell and that is described in the another implementation. Herein, to avoid repetition, detailed descriptions are omitted. When the first RAN device 1300 is in a CU-DU split architecture, the first RAN device 1300 shown in FIG. 13 may be a CU of the first RAN device 1300, a DU of the first RAN device 1300, or a CU-CP of the first RAN device 1300.

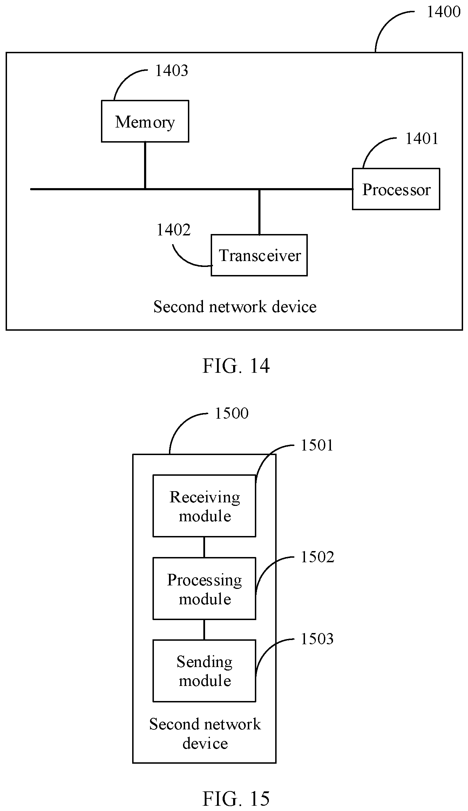

FIG. 14 is a schematic block diagram of a second RAN device 1400 according to an embodiment of this application. The second RAN device 1400 may correspond to (for example, the second RAN device 1400 may be configured as or may be) the RAN device described in the method 400, the RAN device described in the method 500, the RAN device described in the method 600, the RAN device described in the method 700, the RAN device described in the method 800, the second RAN device described in the method 900, or a RAN device that controls a BCC cell and that is described in another implementation. The second RAN device 1400 may include a processor 1401 and a transceiver 1402, and the processor 1401 is communicatively coupled to the transceiver 1402. Optionally, the second RAN device 1400 further includes a memory 1403. The memory 1403 is communicatively coupled to the processor 1401. Optionally, the processor 1401, the memory 1403, and the transceiver 1402 may be communicatively coupled to each other. The memory 1403 may be configured to store an instruction. The processor 1401 is configured to execute the instruction stored in the memory 1403, to control the transceiver 1402 to receive and/or send information or a signal. The processor 1401 and the transceiver 1402 are separately configured to perform actions or processing processes performed by the RAN device described in the method 400, the RAN device described in the method 500, the RAN device described in the method 600, the RAN device described in the method 700, the RAN device described in the method 800, the second RAN device described in the method 900, or the RAN device that controls the BCC cell and that is described in the another implementation. Herein, to avoid repetition, detailed descriptions are omitted. When the second RAN device 1400 is in a CU-DU split architecture, the second RAN device 1400 shown in FIG. 14 may be a CU of the second RAN device 1400, a DU of the second RAN device 1400, or a CU-CP of the second RAN device 1400.

FIG. 15 is another schematic block diagram of a second RAN device 1500 according to an embodiment of this application. The second RAN device 1500 may correspond to (for example, the second RAN device 1500 may be configured as or may be) the RAN device described in the method 400, the RAN device described in the method 500, the RAN device described in the method 600, the RAN device described in the method 700, the RAN device described in the method 800, the second RAN device described in the method 900, or a RAN device that controls a BCC cell and that is described in another implementation. The second RAN device 1500 may include a receiving module 1501, a processing module 1502, and a sending module 1503. The processing module 1502 is communicatively coupled to the receiving module 1501 and the sending module 1503. The second RAN device 1500 may be in a form shown in FIG. 14. The processing module 1502 may be implemented by using the processor 1401 in FIG. 14, and the receiving module 1501 and/or the sending module 1503 may be implemented by using the transceiver 1402 in FIG. 14. The second RAN device 1500 may further include a storage unit, configured to store a program or data to be executed by the processing module 1502, or store information received by the receiving module 1501 and/or information sent by the sending module 1503. Modules or units in the second RAN device 1500 are separately configured to perform actions or processing processes performed by the RAN device described in the method 400, the RAN device described in the method 500, the RAN device described in the method 600, the RAN device described in the method 700, the RAN device described in the method 800, the second RAN device described in the method 900, or the RAN device that controls the BCC cell and that is described in the another implementation. Herein, to avoid repetition, detailed descriptions are omitted. When the second RAN device 1500 is in a CU-DU split architecture, the second RAN device 1500 shown in FIG. 15 may be a CU of the second RAN device 1500, a DU of the second RAN device 1500, or a CU-CP of the second RAN device 1500.

It should be understood that the processor (1001, 1201, or 1401) in the apparatus embodiments of this application may be a central processing unit (central processing unit, CPU), a network processor (network processor, NP), a hardware chip, or any combination thereof. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The memory (1003, 1203, or 1403) in the apparatus embodiments of this application may be a volatile memory (volatile memory), for example, a random access memory (random access memory, RAM); or may be a non-volatile memory (non-volatile memory), for example, a read-only memory (read-only memory, ROM), a flash memory (flash memory), a hard disk drive (hard disk drive, HDD), or a solid-state drive (solid-state drive, SSD); or may be a combination of the foregoing types of memories.

In the several embodiments provided in this application, it should be understood that the disclosed apparatuses and methods may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, function units in embodiments of this patent application may be integrated into one processing unit, or each of the units may exist alone physically, or two or more units may be integrated into one unit.

When functions are implemented in a form of a software function unit and sold or used as an independent product, the functions may be stored in a computer-readable storage medium. Based on such an understanding, the technical solutions of this patent application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this patent application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this patent application, but are not intended to limit the protection scope of this patent application. Any variation or replacement readily figured out by a person skilled in the art within the technical scope disclosed in this patent application shall fall within the protection scope of this patent application. Therefore, the protection scope of this patent application shall be subject to the protection scope of the claims.

## Claims

1. A system information transfer method, comprising:
sending, by a terminal device, a first request to a radio access network RAN device, wherein the first request comprises first information, the first information indicates at least one of the following: the terminal device expects to access a second cell, a second cell that the terminal device expects to access, and at least a part of an identifier of the terminal device, and the first request is used by the terminal device to establish a radio resource control RRC connection to a first cell controlled by the RAN device; and
receiving, by the terminal device, a first response for the first request from the RAN device, wherein the first response comprises a cell identifier and a part of system information of each of one or more second cells.

2. The method according to claim 1, wherein before the sending, by a terminal device, a first request to a radio access network RAN device, the method further comprises:
sending, by the terminal device, a random access preamble to the RAN device; and
receiving, by the terminal device, a random access response from the RAN device.

3. The method according to claim 1 or 2, wherein the first cell sends system information required for the terminal device to initially access the first cell, and the second cell sends a part of system information or does not send system information required for the terminal device to initially access the second cell.

4. The method according to any one of claims 1 to 3, wherein that the first information indicates at least a part of an identifier of the terminal device comprises:
the first information comprises at least a part of a temporary terminal device identifier provided by a 5th generation 5G core network for the terminal device.

5. The method according to any one of claims 1 to 4, wherein the part of the system information of the second cell comprises remaining minimum system information RMSI of the second cell, or RMSI and other system information OSI of the second cell.

6. The method according to any one of claims 1 to 5, wherein the first request is an RRC connection request message or an RRC setup request message.

7. The method according to any one of claims 1 to 6, wherein the first response is an RRC reject message or an RRC connection reject message.

8. The method according to any one of claims 1 to 7, wherein the second cell is a new radio NR cell.

9. The method according to any one of claims 1 to 8, wherein the sending, by a terminal device, a first request to a radio access network RAN device comprises: sending, by the terminal device, the first request to a central unit CU of the RAN device through a distributed unit DU of the RAN device; and the receiving, by the terminal device, a first response for the first request from the RAN device comprises: receiving, by the terminal device, the first response sent by the CU through the DU, wherein the DU is connected to the CU.

10. A system information transfer method, comprising:
receiving, by a radio access network RAN device, a first request from a terminal device, wherein the first request comprises first information, the first information indicates at least one of the following: the terminal device expects to access a second cell, a second cell that the terminal device expects to access, and at least a part of an identifier of the terminal device, and the first request is used by the terminal device to establish a radio resource control RRC connection to a first cell controlled by the RAN device; and
sending, by the RAN device, a first response for the first request to the terminal device, wherein the first response comprises a cell identifier and a part of system information of each of one or more second cells.

11. The method according to claim 10, wherein before the receiving, by a RAN device, a first request from a terminal device, the method further comprises:
receiving, by the RAN device, a random access preamble from the terminal device; and
sending, by the RAN device, a random access response to the terminal device.

12. The method according to claim 10 or 11, wherein before the receiving, by a radio access network RAN device, a first request from a terminal device, the method further comprises:
obtaining, by the RAN device, the cell identifier and the part of the system information of each of the one or more second cells.

13. The method according to any one of claims 10 to 12, wherein the first cell sends system information required for the terminal device to initially access the first cell, and the second cell sends a part of system information or does not send system information required for the terminal device to initially access the second cell.

14. The method according to any one of claims 10 to 13, wherein the part of the system information of the second cell comprises remaining minimum system information RMSI of the second cell, or RMSI and other system information OSI of the second cell.

15. The method according to any one of claims 10 to 14, wherein the first request is an RRC connection request message or an RRC setup request message.

16. The method according to any one of claims 10 to 15, wherein the first response is an RRC reject message or an RRC connection reject message.

17. The method according to any one of claims 10 to 16, wherein the second cell is a new radio NR cell.

18. The method according to any one of claims 10 to 17, wherein the receiving, by a radio access network RAN device, a first request from a terminal device comprises: receiving, by a central unit CU of the RAN device, the first request from the terminal device through a distributed unit DU; and the sending, by the RAN device, a first response for the first request to the terminal device comprises: sending, by the CU, the first response to the terminal device through the DU, wherein the DU is connected to the CU.

19. A terminal device, comprising a processor and a transceiver, wherein
the processor is configured to determine first information, wherein the first information indicates at least one of the following: the terminal device expects to access a second cell, a second cell that the terminal device expects to access, and at least a part of an identifier of the terminal device;
the transceiver is communicatively coupled to the processor, and is configured to send a first request to a radio access network RAN device, wherein the first request comprises the first information, and the first request is used by the terminal device to establish a radio resource control RRC connection to a first cell controlled by the RAN device; and
the transceiver is configured to receive a first response for the first request from the RAN device, wherein the first response comprises a cell identifier and a part of system information of each of one or more second cells.

20. The terminal device according to claim 19, wherein
the transceiver is configured to send a random access preamble to the RAN device; and
the transceiver is configured to receive a random access response from the RAN device.

21. The terminal device according to claim 19 or 20, wherein the first cell sends system information required for the terminal device to initially access the first cell, and the second cell sends a part of system information or does not send system information required for the terminal device to initially access the second cell.

22. The terminal device according to any one of claims 19 to 21, wherein that the first information indicates at least a part of an identifier of the terminal device comprises:
the first information comprises at least a part of a temporary terminal device identifier provided by a 5th generation 5G core network for the terminal device.

23. The terminal device according to any one of claims 19 to 22, wherein the part of the system information of the second cell comprises remaining minimum system information RMSI of the second cell, or RMSI and other system information OSI of the second cell.

24. The terminal device according to any one of claims 19 to 23, wherein the first request is an RRC connection request message or an RRC setup request message.

25. The terminal device according to any one of claims 19 to 24, wherein the first response is an RRC reject message or an RRC connection reject message.

26. The terminal device according to any one of claims 19 to 25, wherein the second cell is a new radio NR cell.

27. The terminal device according to any one of claims 19 to 26, wherein that the transceiver sends a first request to a radio access network RAN device comprises: the transceiver sends the first request to a central unit CU of the RAN device through a distributed unit DU of the RAN device; and that the transceiver receives a first response for the first request from the RAN device comprises: the transceiver receives the first response sent by the CU through the DU, wherein the DU is connected to the CU.

28. A radio access network RAN device, comprising a processor and a transceiver, wherein
the transceiver is configured to receive a first request from a terminal device, wherein the first request comprises first information, the first information indicates at least one of the following: the terminal device expects to access a second cell, a second cell that the terminal device expects to access, and at least a part of an identifier of the terminal device, and the first request is used by the terminal device to establish a radio resource control RRC connection to a first cell controlled by the RAN device;
the processor is coupled to the transceiver, and is configured to determine a first response for the first request, wherein the first response comprises a cell identifier and a part of system information of each of one or more second cells; and
the transceiver is configured to send the first response to the terminal device.

29. The RAN device according to claim 28, wherein
the transceiver is configured to receive a random access preamble from the terminal device; and
the transceiver is configured to send a random access response to the terminal device.

30. The RAN device according to claim 28 or 29, wherein
the processor is configured to obtain the cell identifier and the part of the system information of each of the one or more second cells.

31. The RAN device according to any one of claims 28 to 30, wherein the first cell sends system information required for the terminal device to initially access the first cell, and the second cell sends a part of system informations or does not send system information required for the terminal device to initially access the second cell.

32. The RAN device according to any one of claims 28 to 31, wherein the part of the system information of the second cell comprises remaining minimum system information RMSI of the second cell, or RMSI and other system information OSI of the second cell.

33. The RAN device according to any one of claims 28 to 32, wherein the first request is an RRC connection request message or an RRC setup request message.

34. The RAN device according to any one of claims 28 to 33, wherein the first response is an RRC reject message or an RRC connection reject message.

35. The RAN device according to any one of claims 28 to 34, wherein the second cell is a new radio NR cell.

36. The RAN device according to any one of claims 28 to 35, wherein that the transceiver receives a first request from a terminal device comprises: a central unit CU of the RAN device receives the first request from the terminal device through a distributed unit DU; and that the transceiver sends the first response to the terminal device comprises: the CU sends the first response to the terminal device through the DU, wherein the DU is connected to the CU.

37. A computer-readable storage medium, wherein the computer-readable storage medium stores computer instructions, and when the instructions are run on a computer, the computer is enabled to perform the method according to any one of claims 1 to 9.

38. A computer-readable storage medium, wherein the computer-readable storage medium stores computer instructions, and when the instructions are run on a computer, the computer is enabled to perform the method according to any one of claims 10 to 18.
